Europäisches Patentamt

European Patent Office

Office européen des brevets

(11) Veröffentlichungsnummer: **0 129 752**
**A2**

(12) **EUROPÄISCHE PATENTANMELDUNG**

(21) Anmeldenummer: **84106523.8**

(22) Anmeldetag: **07.06.84**

(51) Int. Cl.⁴: **H 02 J 13/00**
**H 02 J 3/14**

(30) Priorität: **23.06.83 DE 3322558**

(43) Veröffentlichungstag der Anmeldung:
**02.01.85 Patentblatt 85/1**

(84) Benannte Vertragsstaaten:
**AT BE CH DE LI NL**

(71) Anmelder: **BROWN, BOVERI & CIE Aktiengesellschaft**
**Kallstadter Strasse 1**
**D-6800 Mannheim 31(DE)**

(72) Erfinder: **Drexler, Jan Michael, Dipl.-Ing.**
**Werrastrasse 44**
**D-6140 Bensheim(DE)**

(74) Vertreter: **Kempe, Wolfgang, Dr. et al,**
**c/o Brown, Boveri & Cie AG Postfach 351**
**D-6800 Mannheim 1(DE)**

(54) Anordnung zur Laststeuerung einzelner stromverbrauchender Haushaltsgeräte.

(57) Anordnung zur Laststeuerung einzelner stromverbrauchender Haushaltsgeräte

Die vorgeschlagene Anordnung ermöglicht die Steuerung einzelner Verbraucher im Haushalt mit Hilfe von Rundsteuerbefehlen, wobei ein zentraler Rundsteuerempfänger (1) im Haushalt vorgesehen ist. Die bei einer solchen Anordnung gemäß bekannten Lösungen notwendigen Steuerleitungen zwischen dem zentralen Rundsteuerempfänger (1) und den Haushaltsgeräten (3) entfallen bei dem erfindungsgemäßen Vorschlag. Die Übertragung der im Rundsteuerempfänger (1) empfangenen Rundsteuerbefehlen zu den Haushaltsgeräten (3) erfolgt mit Hilfe einer modulierten Trägerfrequenz, die von einem Sendegerät (13) im Rundsteuerempfänger (1) über ein haushaltsinternes Versorgungsnetz (2) zu Empfängern (31) in den Haushaltsgeräten (3) übertragen wird.

EP 0 129 752 A2

0129752

B R O W N , B O V E R I & C I E   AKTIENGESELLSCHAFT

Mannheim                                     21. Juni 1983

Mp.-Nr.                                      ZPT/P3-Sf/Bt

Anordnung zur Laststeuerung einzelner stromverbrauchender Haushaltsgeräte.

Die Erfindung bezieht sich auf eine Anordnung zur Laststeuerung einzelner stromverbrauchender Haushaltsgeräte,
wie beispielsweise Waschmaschinen, Geschirrspüler,
Trockenautomaten, Heißwassergeräte und ähnliche mittels
eines Rundsteuerempfängers.

Eine solche Anordnung ist aus der DE-PS 27 40 586 bekannt. Dabei ist vorgesehen, daß jedem zu steuernden
Haushaltgerät ein Rundsteuerempfänger zugeordnet ist.
Eine solche Lösung hat den Vorteil, daß ohne Eingriff in
die Hausinstallation eine gezielte Steuerung einzelner
Verbraucher möglich ist. Allerdings wird für jedes zu
steuernde Gerät ein vollständiger Rundsteuerempfänger
benötigt, der regelmäßig aus Netzgerät, Filter zur Auswertung der der 50-Hz-Versorgungsspannung überlagerten
Tonfrequenzsignale, Decoder zur Decodierung der in den
Rundsteuertelegrammen (Tonfrequenzsignale) enthaltenen
Informationen einer Relaisausgangsstufe besteht, mit der
die Verbraucher geschaltet werden. Dies erfordert einen relativ hohen Aufwand.

Auch aus der DE-PS 27 43 212 ist eine Anordnung bekannt, bei der jedem zu steuernden Haushaltsgerät ein Rundsteuerempfänger zugeordnet ist. Dabei handelt es sich jedoch um einen noch aufwendigeren Rundsteuerempfänger, der auf die Signale mehrerer Rundsteuersysteme anspricht und dazu ständig die Rundsteuerfrequenzen mehrerer Rundsteuersysteme überwacht und bei Empfang einer Sendung auf einer der Rundsteuerfrequenzen automatisch auf dieser Rundsteuerfrequenz einrastet. Damit wird erreicht, daß ein mit einem solchen Rundsteuerempfänger ausgerüstetes Haushaltsgerät in jedem Versorgungsnetz mit beliebigem Rundsteuersystem betrieben werden kann.

Wesentlich geringer ist der gerätemäßige Aufwand bei der bekannten Anordnung eines zentralen Rundsteuerempfängers mit maximal vier Ausgangsrelais, womit immerhin vier Verbraucher oder Verbrauchergruppen getrennt gesteuert werden können. Allerdings ist die Verlegung von Steuerleitungen zwischen dem zentral angeordneten Rundsteuerempfänger und den Verbrauchern erforderlich.

Der Erfindung liegt die Aufgabe zugrunde, eine Anordnung zur Steuerung einzelner Verbraucher mit Hilfe eines zentralen Rundsteuerempfängers anzugeben, wobei die Verlegung besonderer Steuerleitungen zu vermeiden ist.

Diese Aufgabe wird durch eine Anordnung gemäß dem Anspruch 1 gelöst. Dabei wird die Ausgangsstufe des Rundsteuerempfängers quasi dezentralisiert, indem die decodierten Rundsteuerbefehle mit Hilfe einer Trägerfrequenz über das vorhandene Installationsnetz zu Haushaltsgeräten übertragen werden und dort erst eine Schaltstufe ansteuern bzw. direkt in die Steuerung des Haushaltsgeräts eingreifen.

576/83                              3

Vorteile der Erfindung sind darin zu sehen, daß, obwohl nur ein zentraler Rundsteuerempfänger vorgesehen ist, ohne zusätzlichen Aufwand in der Hausinstallation eine beliebig große Anzahl von Verbrauchern feinstufig gesteuert werden kann. Die zu steuernde Anzahl von Verbrauchern oder Verbrauchergruppen ist nicht durch die Anzahl der sonst üblichen Ausgangsrelais des Rundsteuerempfängers begrenzt. Außer Ein/Aus-Befehlen können auch Sollwerte zu den Verbrauchern übertragen werden. Der Platzbedarf und die Herstellkosten des im Rundsteuerempfänger vorgesehenen Sendegerätes sind geringer als bei Ausgangsstufen mit Relais.

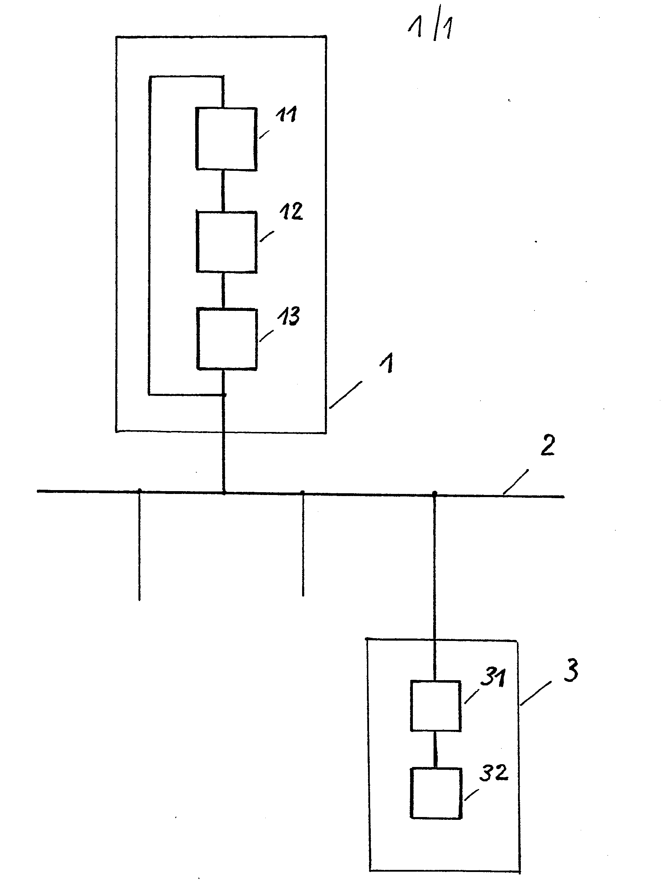

Weitere Vorteile ergeben sich aus der nachstehenden Beschreibung eines Ausführungsbeispiels anhand der Zeichnung und aus den Unteransprüchen.

In der Zeichnung ist ein Rundsteuerempfänger 1 dargestellt, der eine übliche Filtereinrichtung 11 und Decodiereinrichtung 12 enthält. Der Rundsteuerempfänger 1 ist mit dem Versorgungsnetz 2 (haushaltinternes Installationsnetz) verbunden und empfängt und decodiert ankommende Rundsteuertelegramme. Der Ausgang der Decodiereinrichtung 12 ist mit einem im Rundsteuerempfänger 1 enthaltenen (oder dem Rundsteuerempfänger 1 nachgeschalteten) Sendegerät 13 verbunden, das eine Trägerfrequenz von z.B. 100 kHz sendet. Die Trägerfrequenz des Sendegerätes 13 wird durch Rundsteuerbefehle moduliert (z.B. durch Frequenzmodulation), die von der Decodiereinrichtung 12 an das Sendegerät 13 weitergegeben werden.

Das Ausgangssignal des Sendegerätes 13 wird über das Versorgungsnetz 2 des Haushalts zu zu steuernden Haushaltsgeräten 3 übertragen. In den Haushaltsgeräten 3 ist ein Empfänger 31 enthalten, der die Trägerfrequenzsignale demoduliert, so daß die Rundsteuerbefehle zur Verfügung stehen. Der Empfänger 31 kann eine Relaisschaltstufe zur Ausgabe der Rundsteuerbefehle enthalten. In vielen Fällen wird jedoch ein direkter Eingriff der Rundsteuerbefehle in Form von Elektroniksignalen in eine Steuerung 32 des Haushaltsgerätes 3 möglich sein, so daß eine Relaisausgangsstufe entfallen kann.

Der Rundsteuerempfänger 1 mit dem eingebauten Sendegerät 13 kann wie jeder andere Rundsteuerempfänger plombiert werden. Der Empfänger 31 und die Steuerung 32 im Haushaltsgerät 3 können zusammengefaßt und plombiert werden, so daß die Rundsteuereinrichtung nicht außer Funktion gesetzt werden kann.

Haushaltsgeräte 3, die mit einem solchen Empfänger 31 ausgerüstet sind, sind nicht an ein bestimmtes Rundsteuersystem, d.h. nicht an bestimmte Impulsraster oder einen bestimmten Telegrammaufbau gebunden. Allerdings können sie nur von einem Rundsteuerempfänger 1 mit einem Sender 13 als Ausgangsstufe gesteuert werden. Der Aufwand für die Sende- und Empfangseinrichtungen 13, 31 ist gering im Vergleich zu sonst erforderlichen zusätzlichen Steuerleitungen in der Hausinstallation oder zu vollständigen Rundsteuerempfängern je Haushaltsgerät. Außerdem ist langfristig mit fortschreitender Einführung der Hausleittechnik, wobei ebenfalls Steuerbefehle mit Trägerfrequenzen auf dem Versorgungsnetz 2 übertragen werden, damit zu rechnen, daß in Zukunft Haushaltsgeräte serienmäßig mit Empfängern für Trägerfrequenzsignalen ausgerüstet werden, die auch als Empfänger 31 zum Empfang von Rundsteuerbefehlen genutzt werden könnten.

A n s p r ü c h e

1. Anordnung zur Laststeuerung einzelner stromverbrauchender Haushaltsgeräte mittels Rundsteuerempfänger, wobei je Haushalt ein zentraler Rundsteuerempfänger vorhanden ist, dadurch gekennzeichnet, daß

a)  der Rundsteuerempfänger (1) anstelle einer sonst üblichen Relaisausgangsstufe ein Sendegerät (13) als Ausgangsstufe enthält, wobei das Sendegerät (13) eingangsseitig mit dem Ausgang einer im Rundsteuerempfänger (1) vorhandenen Decodiereinrichtung (12) für empfangene Rundsteuertelegramme und ausgangsseitig mit einem haushaltsinternen Versorgungsnetz (2) verbunden ist und wobei das Sendegerät (13) ein Trägerfrequenzssignal sendet, das durch Rundsteuerbefehle am Ausgang der Decodiereinrichtung (12) moduliert ist, und

b)  zu steuernde Haushaltsgeräte (3) einen Empfänger (31) enthalten, der über das Versorgungsnetz (2) empfangene Trägerfrequenzsignale demoduliert und Rundsteuerbefehle ausgibt.

2. Anordnung nach Anspruch 1, dadurch gekennzeichnet, daß der Empfänger (31) mit einer Steuerung (32) im Haushaltsgerät (3) zusammengefaßt und plombierbar ist.

3. Anordnung nach Anspruch 1 oder 2, dadurch gekennzeichnet, daß der Empfänger (31) eine Relaisausgangsstufe enthält.